# EUROPEAN PATENT APPLICATION

(11) **EP 4 718 061 A1**
(43) Date of publication of application: **01.04.2026**
(21) Application number: 24810445.7
(22) Date of filing: 23.05.2024
(51) Int. Cl.: G01N 21/59

(54) **OPTICAL ASSEMBLY AND ANALYZER**

(30) Priority: 23.05.2023 CN 202321259719 U
(71) Applicant: Leadway (HK) Limited, Sheung Wan, Hong Kong (CN)
(72) Inventor: YUAN, Yingchao, Hangzhou, Zhejiang 310030 (CN); SHANG, Tao, Hangzhou, Zhejiang 310030 (CN); YANG, Guo, Hangzhou, Zhejiang 310030 (CN); TANG, Linyong, Hangzhou, Zhejiang 310030 (CN); WEI, Yongchao, Hangzhou, Zhejiang 310030 (CN); HU, Haibin, Hangzhou, Zhejiang 310030 (CN); WANG, Weiping, Hangzhou, Zhejiang 310030 (CN); ZHANG, Beibei, Hangzhou, Zhejiang 310030 (CN)
(74) Representative: Schiweck Weinzierl Koch Patentanwälte Partnerschaft mbB
(86) International application number: PCT/CN2024/094869
(87) International publication number: WO 2024/240208

(57) **Abstract**

Disclosed are an optical assembly and an analyzer equipped with the optical assembly. The optical assembly includes a light source, a light intensity sensor, and a light homogenizing plate mounted between the light source and a sample. By utilizing a light homogenizing effect of the light homogenizing plate, this invention overcomes the problem of test differences caused by light source differences, thereby improving the accuracy and precision of test results.

## Description

### TECHNICAL FIELD

This invention relates to detection analyzers. In particular, to an optical assembly using a transmission method and an analyzer equipped with the optical assembly.

### BACKGROUND

When the optical properties of samples are measured using a transmission method, due to different factory parameters or mounting discrepancies of light sources, differences in light sources across different instruments or differences in optical paths may be caused, thereby affecting the test results. These issues manifest as problems such as inaccurate test results, poor test repeatability, and large inter-instrument variations.

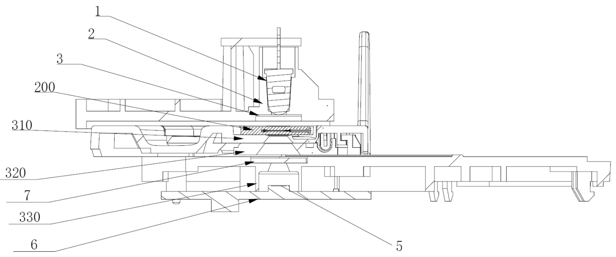

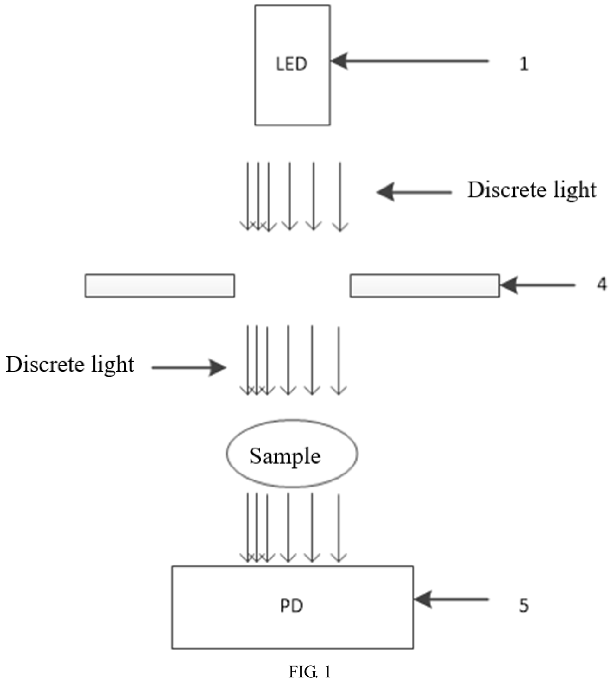

As shown in FIG. 1, an optical assembly for measuring sample content using the transmission method comprise a light source 1 and a light intensity sensor 5. The light-emitting diode (LED) light source is mounted on a light source mounting base, and a photodiode (PD)-based light intensity sensor is mounted on a circuit board. Light emitted from the light source 1 passes through a light-transmitting hole of a light transmission plate 4 and irradiates a detection zone of a detection device. The light transmitted through the detection zone is received by the light intensity sensor 5, and an analyzer converts an optical signal into an electrical signal. It can be seen from the figure that the light emitted by the LED light source is discrete light, with denser light rays on the left and sparser light rays on the right (as indicated by the arrows). This may result in the PD-based light intensity sensor also receiving the discrete light. Due to differences in the discretization of variation among different LED light sources or mounting discrepancies during the mounting of LED light sources, differences in light sources across different instruments occur, consequently resulting in the problem of test differences.

### SUMMARY

To improve the defects in the prior art, one objective of this invention is to provide an optical assembly for use in an analyzer, including a light source and a light intensity sensor, where a light homogenizing medium is arranged in an optical path from the light source to a detection zone of a detection device.

This invention further provides an analyzer, including a sample carrier assembly, a central processing unit, and the optical assembly of this invention.

Further, the light homogenizing medium is capable of converting discrete light into uniform light.

Further, the light homogenizing medium is selected from a light-transmitting material with a certain haze value.

In some embodiments, the haze value of the light homogenizing medium is above 50%. In some further embodiments, the haze value of the light homogenizing medium is between 60% and 90%.

In some embodiments, the light homogenizing medium may be selected from a light homogenizing plate or a light homogenizing film.

Further, the light homogenizing medium is formed by surface treatment of a light-transmitting material to create a light homogenizing surface, or composition of the light-transmitting material contains a light homogenizing agent.

In some embodiments, a light transmission plate provided with a light-transmitting hole is arranged between the light source and the light homogenizing medium, the light homogenizing medium is mounted on a side of the light transmission plate opposite to the light source, and the light homogenizing medium covers the light-transmitting hole.

In some embodiments, a light-transmitting baffle is arranged between the light intensity sensor and the detection device.

In some embodiments, the light source is an LED light source, and the light intensity sensor is a PD.

In some embodiments, the light source is mounted on a light source mounting base, and the light intensity sensor is mounted on a circuit board.

In some embodiments, the light-transmitting baffle is further arranged between the light intensity sensor and the detection device.

In some embodiments, the sample carrier assembly of the analyzer includes a sample stage and a motion device.

In some embodiments, the analyzer conducts detection using a transmission method.

In some embodiments, the analyzer may be a blood glucose meter, an Hb meter, a cholesterol meter, a urine analyzer, an electronic pregnancy test kit, a dry biochemical analyzer, or the like.

This invention has the following beneficial effects: the light homogenizing medium is arranged in the optical path from the light source to the detection zone of the detection device. After light emitted from the light source passes through the light homogenizing medium, uniform light irradiates the detection zone of the detection device, and the analyzer processes received optical information to obtain a detection result. By utilizing a light homogenizing effect of the light homogenizing medium, this invention filters out optical path differences caused by different factory parameters or mounting discrepancies of light sources, thereby making the light sources irradiating a to-be-detected sample approximately consistent across different devices, thus solving the problem of test differences due to light source differences.

### BRIEF DESCRIPTION OF THE DRAWINGS

FIG. 1 is a schematic diagram of an optical assembly without a light homogenizing plate mounted;
FIG. 2 is a schematic diagram of an optical assembly with a light homogenizing plate mounted;
FIG. 3 is a schematic diagram illustrating a light homogenizing effect of optical assemblies provided with light homogenizing plates having different haze values;
FIG. 4 is a schematic exploded view of an optical assembly with a light homogenizing plate mounted and a detection device;
FIG. 5 is a schematic combined diagram of an optical assembly with a light homogenizing plate mounted and a detection device;
FIG. 6 is a schematic diagram of a sample stage of an analyzer located at a sample loading position; and
FIG. 7 is a schematic diagram of a sample stage of an analyzer located at a detection position.

### DETAILED DESCRIPTION OF THE EMBODIMENTS

This invention will be described in detail below with reference to specific embodiments and the accompanying drawings. These specific embodiments are merely limited examples without departing from the spirit of this invention, and do not exclude other specific implementations developed by a person of ordinary skill in the art by combining existing technologies with this invention.

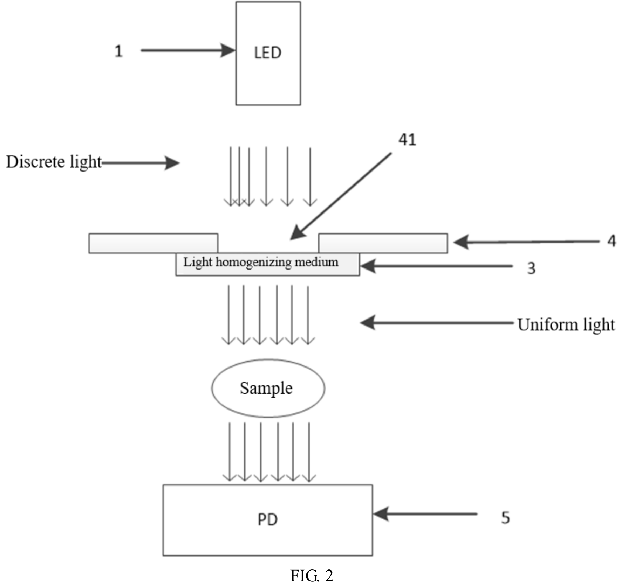

As shown in FIG. 2, the optical detection assembly includes a light source 1, a light homogenizing plate 3, and a light intensity sensor 5. The light source is mounted on a light source mounting base, and the light intensity sensor 5 is mounted on a circuit board. A light transmission plate 4 is arranged between the light source and the light homogenizing plate, with a light-transmitting hole 41 formed in the light transmission plate, and the light homogenizing plate is mounted on a side of the light transmission plate 4 opposite to the light source. Light emitted from the light source passes through the light-transmitting hole to reach the light homogenizing plate and irradiates a detection zone of a detection device. Then, the light transmitted through the detection zone is received by the light intensity sensor 5, and an analyzer converts an optical signal into an electrical signal.

Compared with FIG. 1, the light irradiating a sample is transformed from discrete light to uniform light. Specifically, as shown in FIG. 2, the discrete light emitted from the light source 1 is converted into the uniform light after passing through the light homogenizing plate 3. The uniform light irradiates the to-be-detected sample, and the transmitted light is received by the light intensity sensor.

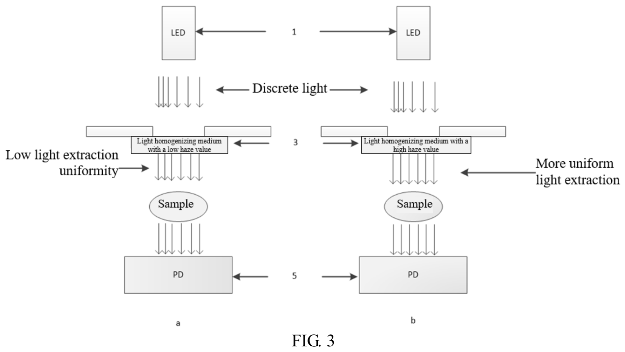

The light source 1 may be selected from an LED light source, and the corresponding light intensity sensor is selected from a PD. The shown light homogenizing plate 3 is selected from a light-transmitting material with a certain haze value, for example, a glass or plastic sheet, and may be selected with either a low or high haze value according to product design requirements. As shown in FIG. 3a, the optical assembly employs a light homogenizing plate with a low haze value, while as shown in FIG. 3b, the optical assembly employs a light homogenizing plate with a high haze value.

In this embodiment, the light homogenizing plate is arranged in an optical path from the light source to the detection zone of the detection device. In other embodiments, the light homogenizing plate may also be replaced with other light homogenizing media. The light homogenizing medium is capable of converting discrete light into uniform light; for example, the light homogenizing medium is capable of homogenizing light intensity incident thereupon. The light homogenizing medium is selected from a light-transmitting material with a certain haze value. In some embodiments, the haze value of the light homogenizing medium is above 50%.

The preparation of the light homogenizing medium includes, but is not limited to, surface treatment of a light-transmitting material to form a light homogenizing surface, such as forming a frosted surface. The light homogenizing medium may also be prepared by incorporating a light homogenizing agent into the composition of the light-transmitting material, for example, through doping with the light homogenizing agent. The light homogenizing medium is selected from materials such as light homogenizing plates or light homogenizing films.

In another design solution, a light-transmitting baffle is further arranged between the light intensity sensor and the detection device. The light-transmitting baffle can prevent foreign matter from falling onto optical elements such as the PD-based light intensity sensor. The detection device is configured to collect a to-be-detected sample and may or may not contain a reagent.

The optical assembly shown in FIG. 2 is assembled into the analyzer and measures an analyte in the sample using an optical detection principle of a transmission method, thereby obtaining content information of the analyte in the sample.

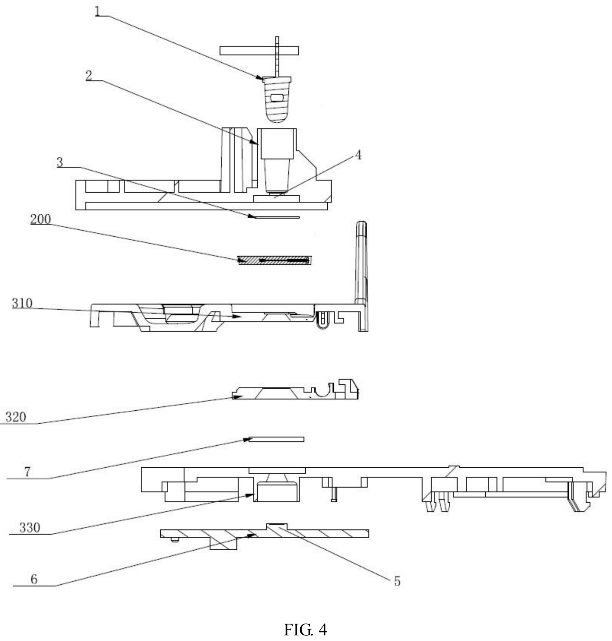

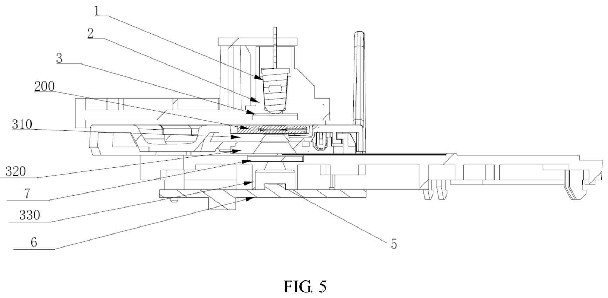

As shown in FIGs. 4 and 5, the optical assembly includes a light source 1, a light homogenizing plate 3, and a light intensity sensor 5. The light source is mounted on a light source mounting base 2, and the light intensity sensor 5 is mounted on a circuit board 6. The light source mounting base 2 is provided with a light transmission plate 4 having a light-transmitting hole 41. The light homogenizing plate is mounted on a side of the light source mounting base 2 opposite to the light source, and is located below the light-transmitting hole 41. Light emitted from the light source passes through the light-transmitting hole to reach the light homogenizing plate 3 and irradiates a detection zone 201 of a detection device 200. Then, the light transmitted through the detection zone is received by the light intensity sensor 5, and an analyzer 1000 converts an optical signal into an electrical signal and obtains content information of an analyte in a sample through calculation.

In an implementation, a light-transmitting baffle 7 is further arranged between the light intensity sensor and the detection device.

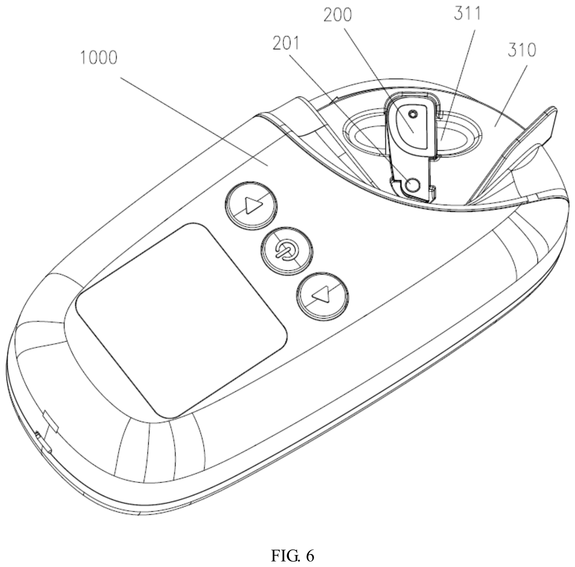

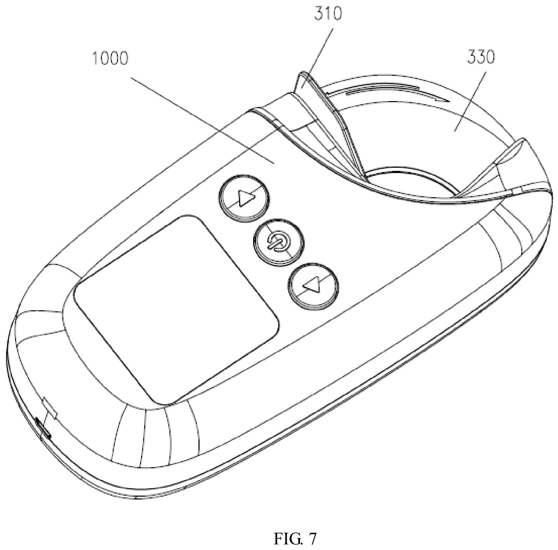

The analyzer 1000 shown in FIGs. 6 and 7 includes a sample carrier assembly, a central processing unit, and the optical assembly shown in FIGs. 4 and 5. The sample carrier assembly includes a sample stage 310 configured to hold the detection device. The sample stage is movable in the analyzer to achieve positional switching between a sample loading position and a detection position. As shown in FIG. 6, when the sample stage is in the sample loading position, a user can place the detection device 200 on the sample stage or remove the detection device from the sample stage. As shown in FIG. 7, when the sample stage is in the detection position, the detection device is located in an optical path of the optical detection assembly. The sample stage 310 is provided with a detection device storage slot 311.

In the design solution shown in FIGs. 4-7, the sample carrier assembly of the analyzer includes a sample stage 310, a rotating shaft connecting member 320, and a rotating base 330. The sample stage 310 is connected to the rotating base 330 through the rotating shaft connecting member 320, thereby enabling rotational switching of the sample stage 310 between the sample loading position (shown in FIG. 6) and the detection position (FIG. 7) on the analyzer.

### Example 1: Testing Experiment of an Optical Assembly without a Light Homogenizing Plate

Analyzers for testing Hb in blood samples using a transmission method, as shown in FIG. 6, were assembled and labeled as Machines 2, Machines 4, and Machines 5, respectively. In this example, optical assemblies of the analyzers were not equipped with light homogenizing plates. Light sources employed lamps with two wavelengths: 505 nm and 880 nm, and the units for both the test results and the sample benchmark values are g/L, and the same applies to other examples.

Blood samples containing three Hb concentrations, high, moderate, and low respectively, were used. Each concentration of the samples was tested 10 times per machine, and average values were taken. The test results are shown in Table 1. The coefficient of variation (CV) of the inter-machine test results among the three machines was relatively large, failing to meet the testing requirements for Hb.

**Table 1**

| | Low | Moderate | High |
|---|---|---|---|
| Machine 2 | 35.3 | 104.5 | 162.0 |
| Machine 4 | 46.6 | 121.3 | 184.3 |
| Machine 5 | 55.3 | 139.5 | 204.2 |

### Coefficient of variation:

| | | | |
|---|---|---|---|
| Average value | 45.7 | 121.8 | 183.5 |
| CV | 18.5% | 12.0% | 9.6% |

### Example 2: Experiment on the Effect of Inter-Batch Variation of Light Sources on Test Results without a Light Homogenizing Plate

Analyzers for testing Hb using a transmission method, as shown in FIG. 6, were assembled and labeled as Machines 2, Machines 4, and Machines 5, respectively. In this example, optical assemblies of the analyzers were not equipped with light homogenizing plates. Light sources employed lamps with two wavelengths: 505 nm and 880 nm, and the units of the test results were g/L.

Blood samples containing three Hb concentrations, high, moderate, and low respectively, were used. Each concentration was tested 10 times per machine, and average values were taken.

In this example, an additional control group was further set: the original lamp from Machine 2 was mounted on Machine 4 (labeled as Machine 4'), and the original lamp from Machine 4 was mounted on Machine 2 (labeled as Machine 2'). The above experiment was repeated.

The test results are shown in Table 2. The CV of the inter-machine test results among the three machines (Machines 2, Machines 4, and Machines 5) was relatively large, failing to meet the testing requirements for Hb. In a control experiment where LED lamps of Machines 2 and Machines 4 were swapped (Machines 2' and Machines 4'), the experimental data showed characteristics opposite to the original test data in terms of high and low values, indicating that the light sources have a great impact on this optical path system.

**Table 2**

| | Low | Moderate | High |
|---|---|---|---|
| Machine 2 | 51.0 | 132.3 | 195.0 |
| Machine 4 | 39.2 | 111.2 | 171.3 |
| Machine 5 | 56.0 | 144.8 | 210.4 |
| Machine 2' (employing the original lamp from Machine 4) | 38.4 | 114.3 | 174.8 |
| Machine 4' (employing the original lamp from Machine 2) | 46.3 | 126.5 | 190.8 |

### Coefficient of variation

| | | | |
|---|---|---|---|
| Average value | 45.7 | 121.8 | 183.5 |
| CV | 14.9% | 11.0% | 8.5% |

### Example 3: Testing Experiment of an Optical Assembly with a Light Homogenizing Plate Having a Haze Value of 60%

Analyzers for testing Hb using a transmission method, as shown in FIG. 6, were assembled and labeled as Machines 1 to 5, respectively. In this example, optical assemblies of the analyzers were equipped with light homogenizing plates having a haze value of 60%. Light sources employed lamps with two wavelengths: 505 nm and 880 nm, and the units of the test results were g/L.

Blood samples containing three Hb concentrations, high, moderate, and low respectively, were used. Each concentration was tested 10 times per machine, and average values were taken.

It can be seen from the experimental data in Table 3 that the CV of the instrument test results has been significantly reduced.

**Table 3**

| | Low | Moderate | High |
|---|---|---|---|
| Machine 1 | 31 | 99 | 167 |
| Machine 2 | 31 | 99 | 167 |
| Machine 3 | 31 | 101 | 170 |
| Machine 4 | 31 | 101 | 172 |
| Machine 5 | 32 | 102 | 172 |

### Coefficient of variation:

| | | | |
|---|---|---|---|
| Average value | 31 | 100 | 170 |
| CV | 2.64% | 1.62% | 1.58% |

### Example 4: Testing Experiment of an Optical Assembly with a Light Homogenizing Plate Having a Haze Value of 90%

Machines 1 to 5 in Example 3 were used, and the light homogenizing plates of Machines 1 to 5 were replaced with those having a haze value of 90%. The experimental process was the same as that in Example 3.

It can be seen from the experimental data in Table 4 that, through further light homogenizing effects of the light homogenizing plates on light sources, the CV of the instrument test results has been reduced to a greater extent.

**Table 4**

| | Low | Moderate | High |
|---|---|---|---|
| Machine 1 | 30 | 100 | 171 |
| Machine 2 | 30 | 101 | 175 |
| Machine 3 | 30 | 100 | 173 |
| Machine 4 | 30 | 101 | 173 |
| Machine 5 | 30 | 101 | 174 |

### Coefficient of variation

| | | | |
|---|---|---|---|
| Average value | 30 | 100 | 173 |
| CV | 1.72% | 1.03% | 1.09% |

### Example 5: Experiment on Testing Accuracy and Coefficient of Variation of Analyzers with Light Homogenizing Plates Mounted in Optical Assemblies

Using the design solution in Example 4, three analyzers were assembled and labeled as Machines 6-8, respectively. The experimental process was the same as that in Example 4.

It can be seen from the data in Table 5 that both the testing accuracy and CV of the instrument test results meet the testing requirements.

**Table 5**

| Reference value of sample (g/L) | 47 | 129 | 190 |
|---|---|---|---|
| Machine 6 | 45.822162 | 126.87944 | 189.87175 |
| Machine 7 | 46.163476 | 127.61044 | 190.91076 |
| Machine 8 | 46.605162 | 126.65025 | 189.41591 |
| Average value | 46.20 | 127.05 | 190.07 |
| CV | 1.2% | 1.3% | 0.6% |

When Hb content in blood was measured using a transmission method, the requirements for a measurement deviation were as follows: when the sample value was below 100 g/L, the deviation should be ≤ 7 g/L; and when the sample value was above 100 g/L, the deviation should be ≤ 7%. It can be seen from the statistical data in Table 6 that the measurement results meet the testing requirements.

**Table 6**

| Reference value of sample | 47 g/L | 129 g/L | 190 g/L |
|---|---|---|---|
| | Test deviation value or test deviation % | | |
| Machine 6 | -1.2 | -1.6% | -0.1% |
| Machine 7 | -0.8 | -1.1% | 0.5% |
| Machine 8 | -0.4 | -1.8% | -0.3% |

## Claims

1. An optical assembly for use in an analyzer, comprising a light source and a light intensity sensor, wherein a light homogenizing medium is arranged in an optical path from the light source to a detection zone of a detection device.

2. The optical assembly of claim 1, wherein the light homogenizing medium is capable of converting discrete light into uniform light.

3. The optical assembly of claim 1, wherein the light homogenizing medium is selected from a light-transmitting material with a certain haze value.

4. The optical assembly of claim 3, wherein the haze value of the light homogenizing medium is above 50%.

5. The optical assembly of claim 4, wherein the haze value of the light homogenizing medium is between 60% and 90%.

6. The optical assembly of claim 3, wherein the light homogenizing medium is selected from a light homogenizing plate or a light homogenizing film.

7. The optical assembly of claim 1, wherein the light homogenizing medium is formed by surface treatment of a light-transmitting material to create a light homogenizing surface, or composition of the light-transmitting material contains a light homogenizing agent.

8. The optical assembly of claim 1, wherein a light transmission plate provided with a light-transmitting hole is arranged between the light source and the light homogenizing medium, the light homogenizing medium is mounted on a side of the light transmission plate opposite to the light source, and the light homogenizing medium covers the light-transmitting hole.

9. The optical assembly of claim 1, wherein a light-transmitting baffle is arranged between the light intensity sensor and the detection device.

10. An analyzer, comprising a sample carrier assembly, a central processing unit, and the optical assembly of any one of claims 1-9.

11. The analyzer of claim 10, wherein the sample carrier assembly comprises a sample stage and a motion device.

12. The analyzer of claim 10, wherein the analyzer conducts detection using a transmission method.

13. The analyzer of claim 10, wherein the analyzer is selected from a blood glucose meter, an Hb meter, a cholesterol meter, a urine analyzer, an electronic pregnancy test kit, and a dry biochemical analyzer.
